# EUROPEAN PATENT SPECIFICATION

(11) **EP 0 684 395 B1**
(45) Date of publication and mention of the grant of the patent: **09.02.2000**
(21) Application number: 95302655.6
(22) Date of filing: 21.04.1995
(51) Int. Cl.: F16B 13/12

(54) **Wall-plugs having anti-rotation arms**
Dübel mit Vorsprüngen gegen Verdrehung
Chevilles avec des parties en saillie pour empêcher la rotation

(30) Priority: 29.04.1994 GB 9408587
(43) Date of publication of application: 29.11.1995
(73) Proprietor: Black & Decker Inc., Newark Delaware 19711 (US)
(72) Inventor: Anquetin, Robert Paul, F-Etrechy (Esonne) (FR)
(74) Representative: Dlugosz, Anthony Charles

(56) References cited:
- CH-A- 480 551
- DE-A- 1 813 812
- FR-A- 2 109 244
- FR-A- 2 700 816
- US-A- 3 516 324
- US-A- 4 596 503

## Description

This invention relates to plastics wall plugs also known as wall anchors and particularly to those comprising a head of substantially cylindrical configuration provided with an axial through-bore and a legs portion having at least one axial slit to form two or more legs.

In use, a hole is drilled in a masonry type product (i.e. a product which does not directly take a screw with any degree of security) and in the hole so-formed the plug is inserted with the legs portion first. Usually the end of the head portion is arranged to lie flush with the surface of the product, although this is not critical.

A screw or other screw threaded fastener is then inserted in the bore of the head portion and turned until the threads begin to bite in the material of the plug. The bore might also be tapered inwardly to assist pick-up of the screw. It is only once the screw begins to bite that the cross-section of the screw and parts of the plug, in combination, begin to exceed the dimensions of the hole and so the plug starts to deform and grip the bore of the hole in the product, and the threads of the screw cut a strong thread in the plug.

In the leg portion of the plug the diameter of the bore tends to reduce and even disappear so that as the screw progresses it gets tighter and tighter in the bore in the product.

Ultimately the screw has progressed as far as required and it has a level of security in the product in question. It is an object of the present invention to improve that level of security, which it is known can be improved and is influenced by a number of different factors. One such factor is the material of the product; another is the size of the hole, the plug and the screw; another is the material of the plug; and another is the design of the plug. By "security" is meant the difficulty with which the screw is simply pulled out of the product in which it, and the plug, is fixed. Needless to say, the greater that difficulty the more secure is the fixing.

We have developed several features of the design of a plug, of which the present invention is one, which together result in a plug which is comparable in performance with existing plugs constructed from polyamide materials such as Nylon when it is itself constructed from polypropylene, a material acknowledged to be significantly less expensive then polyamide materials but usually significantly less effective. Put another way, it is an object of the present invention to provide a plug which has improved security over similar known plugs in corresponding circumstances.

It is known that plugs to which the present invention relates may also be provided with arms formed in their body portion by U-shaped openings in the wall of the body portion and communicating with the bore of the plug. Such arms usually have a dimension which extends into the bore of the plug so that the plug almost immediately grips the bore of the product in which it is fitted. This serves the purpose of spreading the gripping loads in the bore of the product and generally increases the security of the fixing.

A plug of the type incorporating arms formed in their body portion by U-shaped openings are disclosed in U.S. Patent No. 3,516,324 which is considered to comprise the closest prior art to the present invention, wherein this earlier U.S. patent discloses a wall plug according to the preamble of the main claim.

It is also known to provide such arms with teeth to improve grip. However, it is a particular object of the present invention to improve the performance of plugs provided with such arms.

In accordance with the present invention there is provided a wall plug comprising:-
a body portion constructed as a substantially cylindrical body having an axial through-bore;
a legs portion connected to the body portion and comprising two legs defined by a slit substantially disposed about a first plane;
two arms formed in the body portion by U-shaped openings in the body portion, one on either side of the body portion, the arms each comprising a base connected along a hinge line to the body portion, the hinge line being closer to the leg portions than the base and the base lying substantially parallel to the axis of the through-bore, having transverse ridges formed on the base, which ridges are so arranged that they have an axial dimension to counteract rotational forces on the plug;
and characterised in that the ridges are curved so that their centres between their edges are nearer the leg portion than their edges.

Preferably said ridges are chevron-shaped.

The fact that the ridges have an axial dimension means that, when the arms are pressed into engagement with the bore of the product in question, the axial dimension is contrary to imposed torque on the wall plug as a screw is screwed into it so that rotation of the plug in the bore of the product, which defeats further insertion of the screw, can be effectively prevented.

We have filed two co-pending applications simultaneously herewith under the titles "Wall plugs having arms" and "Wall plugs having ridged arms." These both describe further features of the arms of wall plugs which further enhance their effectiveness, the latter in particular providing further anti-rotation benefits and which, together with the present invention, result in a wall plug of particular effectiveness. We have also filed simultaneously herewith an application under the title "Wall plugs with fluted legs" and an application under the title "Wall plugs with wings." These add further features of a wall plug, all capable of being incorporated in the same wall plug, resulting in a particularly secure wall plug which, even when constructed from polypropylene, has comparable security to presently available polyamide plugs in corresponding circumstances. Certainly such a plug is an improvement over known plugs not having these features.

The invention is further described hereinafter, by way of example, with reference to the accompanying drawings, in which:-
Figure 1a is a perspective view of a wall plug according to the present invention;
Figures 1b and c are respectively a side view and a plan view of the plug of Figure 1a, seen in the direction of the arrows b and c respectively in Figure 1a;
Figures 2a and b are end views of the plug of Figure 1a, seen in the direction of the arrows IIa and IIb respectively in Figure 1a;
Figure 3 is a section on the line III-III in Figure 1c;
Figure 4 is a side view of a core pin forming the bore of the plug of Figure 1;
Figure 5 is a perspective view of a plug similar to that of Figure 1 but without arms;
Figure 6 is a schematic illustration showing stages of use of the wall plug of Figure 1 in solid construction product; and
Figure 7 is as Figure 6 but in hollow construction product.

In the drawings a wall plug or anchor 10 comprises a moulded plastics component having a body portion 12 and a legs portion 14. The legs portion 14 forms a front end 16 of the plug, while the body portion forms a back end 18. The legs portion 14 is defined by a longitudinal slit 20 which terminates at a conjunction 22 between the body and leg portions.

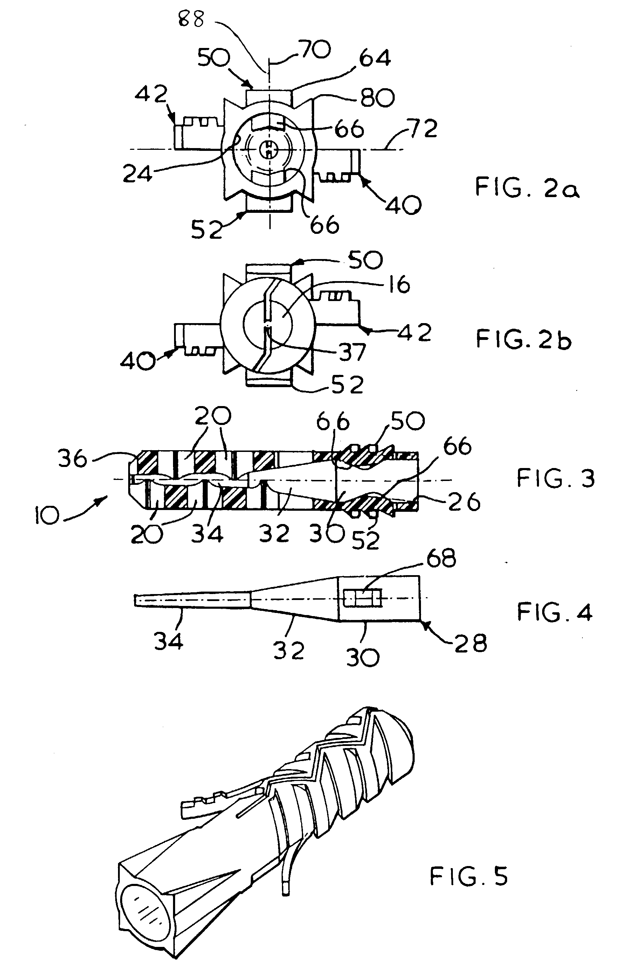

A longitudinal bore 24 extends almost the entire length of the plug 10 from an opening 26 at the back end 18 to the front end 16. The bore 24 is formed in a mould (not shown) by a core pin 28, the relevant part of which is shown in Figure 4. This has, and forms in the bore 24, a cylindrical body part 30, a sharply tapering conjunction part 32 and a barely tapering leg part 34.

The slit 20 communicates with the bore 24 from either side of the plug and is formed as a zig-zag with complementary zigs and zags on either side of the plug. The slit 20 on each side of the plug, and the bore 24 between, defines two legs 36,38 of the plug 10. The legs are entirely separate from one another apart from their mutual conjunction with the body portion 12 and a small, frangible tab 37 between them at the front end 16 of the plug.

Each leg 36,38 carries a wing 40,42 connected to each leg at a hinge line 44. Each wing arches outwardly from the plug and backwardly towards the body portion 12.

Each wing has teeth 46 on one edge but is flat on the other. Moreover, in the conjunction 22 region of plug 10, there is provided recesses 48 adapted to receive and locate the wings 40,42 as explained further below.

The body portion 12 has two arms 50,52 formed by U-shaped openings 54 in the body portion 12 and communicating with the bore 24.

Each arm 50,52 comprises a base 58 which connects to the plug at hinge line 56 and extends backwards away from the legs portion 14. The base has ridges 60 which are chevron-shaped, pointing forwards, and which extend from the base, not only radially, but also laterally, or rather circumferentially, into the opening 54. The ridges have chamfered front faces 62 which meet the circumferential parts of the ridges 60 at sharp corners 64.

Each arm 50,52 has a dimension 66 (see Figures 2a and 3) which extends into the bore 24 of the plug. The dimension 66 is shaped by an indentation 68 of the core pin 28 to have a concave curvature approximately centred on the long axis 100 the plug 10.

The plug 10 has a first plane 70 defined by the slit 20 and which corresponds with the section line III - III and the plane of view in Figure 3. Both arms 50,52 are disposed on the first plane 70. A second plane 72 contains the axis 100 too, and lies perpendicular the first plane 70. The wings 40,42 lie substantially in the second plane 72, the flat edges of the wings lying in said plane. The second plane also defines the break line between the two mould parts (not shown) which are used to make the plug 10.

The body portion 12 is completed by four fins 80.

The legs 36,38 are each provided with flutes 82 which are each approximately semi-circular extending around each leg from the slit 20 on one side to the slit on the other side.

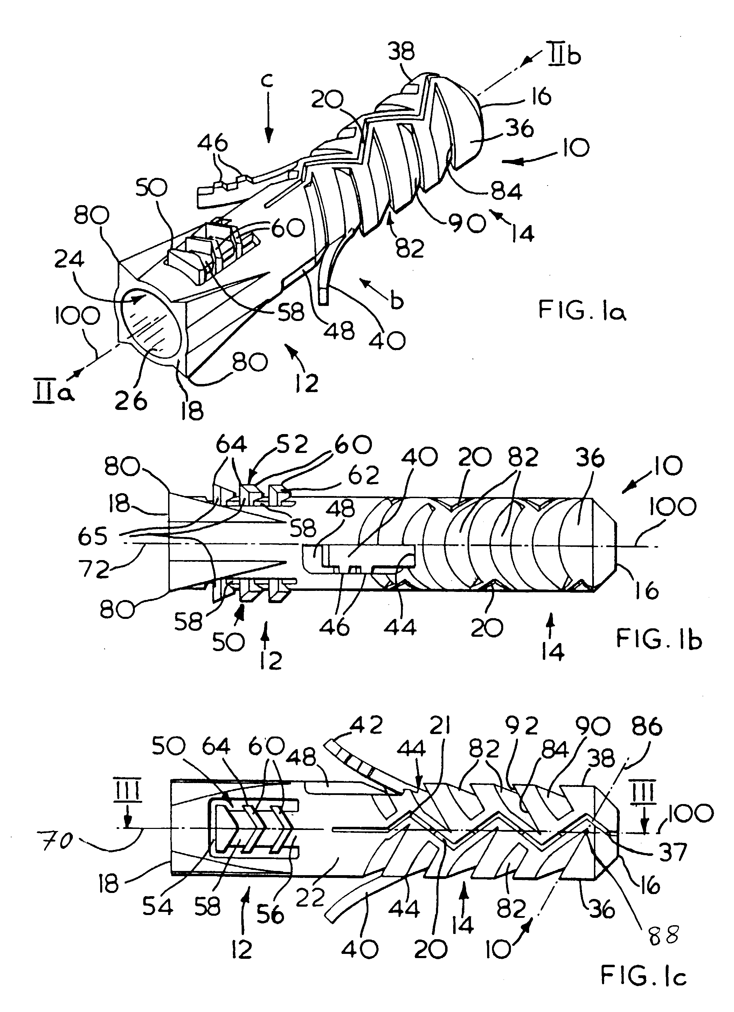

The flutes on each leg are inclined backwardly and comprise, in section, V-shaped notches. On leg 36, one side 84 of each notch lies in one of a series of parallel third planes (for example, plane 86 in Figure 1c) which planes are inclined with respect to the axis 100 of the plug 10. The first plane 70 and third plane 86 intersect along a line (indicated as point of intersection 88 of the planes 86 and 70 in Figure 1c or line 88 contained in the first plane 70 in Figure 2a) which is perpendicular to axis 100. The notches on leg 38 correspond, but here the respective plane is inclined in the other direction with respect to the axis 100.

The other side 90 of the V-shaped notches forming flutes 82 are part conical and meet the sides 84 along an elliptical line 92, centred on the axis 100, at the base of each flute.

Thus although the flutes 82 are inclined and are undercut, at least in the second plane 72, they are capable of being formed in a two-part mould separating in the second plane 72 in the direction of line 88.

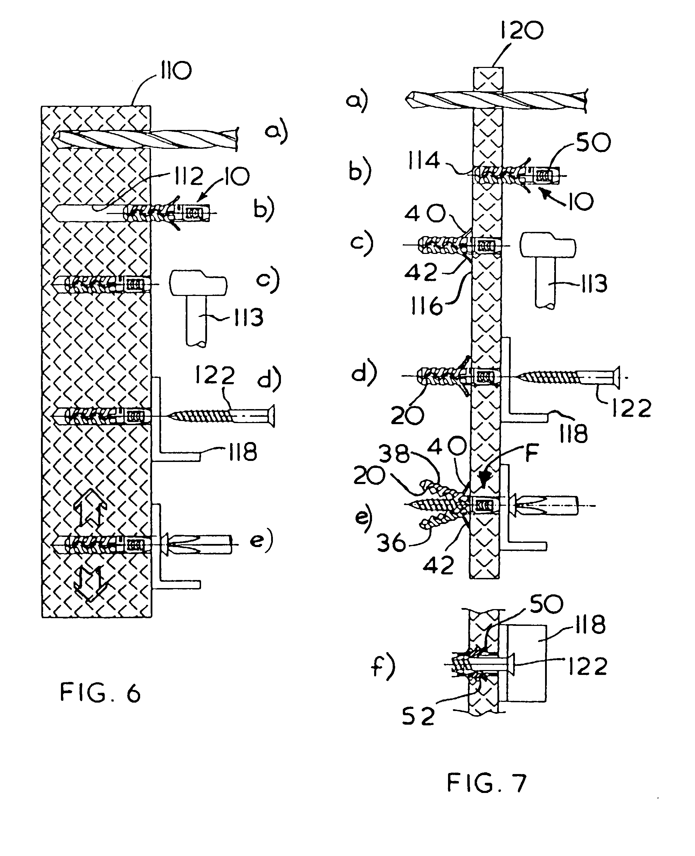

Figure 5 of the drawings shows a different embodiment of the plug 10 in which the arms 50,52 are not employed.

Figures 6 and 7 of the drawings show the mode of operation of the plug 10 in solid construction product 110 and hollow construction product 120 respectively. The following description applies to both modes unless otherwise stated.

The first step a) is to drill a hole in the product: a blind bore 112 in the solid material 110 and a through bore 114 in the hollow material 120. The hollow material 120 may be sheet material, as shown, although it may equally comprise a cavity in, for example, an aerated or hollow brick.

In step b), the plug 10 is inserted in the bore 112,114. The diameter of the bore 112,114 should be substantially the same as the diameter of the plug. In step c), the plug is fully inserted, possibly with the assistance of a hammer 113. In either case, the wings 40,42 are compressed against the plug body 10 and housed within the recesses 48 provided therefor. However, even when received in the recesses, the teeth 46 on each wing stand proud of the cylindrical surface of the plug in the conjunction region 22. These teeth thus bite into the material of the product and are pressed into engagement with the bore 112,114 by the resilience of the plastics material of the wings 40,42.

In the case of the hollow wall, when the plug is fully inserted, the wings open out again behind the hollow construction product 120 and rest against, or perhaps slightly away from, rear surface 116, depending on the thickness of the product 120.

Also during insertion at step c), the arms 50,52 are in both cases inwardly deflected, because they stand proud of the cylindrical surface of the body portion 12, in particular the corners 64 of the ridges 60. The chevron shape of the ridges 60 assists insertion by spreading and removing any loose material in the bores 112,114.

When the arms 50,52 are inwardly deflected, then the dimensions 66, already intruding into the bore 24, further enter this space and between them form a receptacle, by virtue of their concave surface, for a screw fastener.

While a screw is shown, any form of threaded fastener having a coarse thread, so long as it is appropriately dimensioned, will suffice, although even a nail will usually provide some form of fixing.

In step d), an article 118 to be secured to the product is offered up to the bore 112,114 and plug therein. A screw 122 is then inserted and immediately engages between the dimensions 66 of the arms 50,52. The diameter of the screw is arranged so that as it passes through the plug, the arms 50,52 are forced radially outwards. The curvature of the dimensions 66 both keep the screw central on the axis 100 and prevent, or at least subdue, any tendency of the arms to be deflected sideways.

At this time, the ridges 60 on the outside of the arms 50,52 bite further into the material of the product 110,120 (depending on the material of the product and, indeed, of the plug). In hard material this biting may not be very much, but in such material that is not so important because the dimensions of the plug, hole and screw would be selected such that, in combination, all three form a tight fit in the bore. Even if this were not the case, or where the material is relatively soft, then two features of the arms 50,52 mitigate against the natural tendency of the plug to rotate in the bore 112,114 as the screw 122 is turned in the plug 10.

The first feature is the corners 64 on the arms 50,52 provided by the fact that the ridges 60 extend around the base 58 of each arm. The corners 64 and sides 65, present a sharp point which is driven into the material of the product when the screw is inserted and which bite in further if the plug should start to turn.

The second feature is the fact that the ridges 60 are chevron-shaped providing an axial dimension which therefore must cut out more material as the plug rotates. Since the product would resist material being removed, the chevron ridges act as a brake against rotation.

There is, of course, a conventional anti-rotation element provided in the plug 10 by the fins 80 giving the plug a substantially square section at its end 18.

Referring only to the solid construction product 110 of Figure 6 for the moment, there are two further anti-rotation elements of the plug 10. First are the wings 40,42 acting here in a conventional manner and in which the teeth 46 are arranged to bite into the material in a tightening direction of the screw 122.

Secondly, the flutes 82 in the legs 36,38 are inclined as described above. Like the chevrons 60 these give the flutes an axial dimension braking any rotation in the same manner.

The fact that the split 20 is non-linear and that the "zigs" and "zags" alternate with one another on either side of the plug, ensures that the screw stays central and is not allowed to get deflected sideways where it would have to grip against the frangible material of the product and where a secure fixing could not be achieved.

However, the non-linear, zig-zag split has a further function in the hollow construction product application of Figure 7.

Because of the zig-zag split 20, the legs become splayed apart, when there is nothing to stop them doing so, much more than if there was a linear split. This is because the legs ride up, as it were, on the first "zig" 21 on one side of each leg. This presses the wings 40,42 into tight engagement with the rear surface 116 of the hollow product 120 and the result is a secure fixing. That is to say, the arms 50,52 are gripping the bore 114 so the plug is secure there. Secondly, the legs 36,38 are splayed wide apart behind the product 120 which itself adds security and makes difficult the withdrawal of the screw and plug as a unit; and, thirdly the wings 40,42 pressed against the back of the product 120 provides a further anchor against withdrawal.

Returning to the solid construction product 110, the plug 10 provides a very secure fixing against unitary pull-out for several reasons. The arms 50,52 act as they do in the hollow construction with the chevrons 60 now resisting pull out. Instead of the pointed chevrons and sloping front faces 62 facilitating insertion, the open rear gapes of the chevron 60 and the sharp edges at the top of the faces 62, not to mention the corners 64 digging into the material, all conspire to make withdrawal difficult without prior removal of the screw.

In blind bores, the wings do offer a certain amount of resistance to withdrawal but this is conventional. However, the inclined flutes 82 which provide undercut barbs in the surface of the plug, in the very region (i.e. plane 72) where most of the pressure exerted by the screw attempting to splay the legs 36,38 is felt, offers further and significant resistance to pull-out.

Finally, in order to balance the forces acting on the product by the wall plug once a screw is inserted and to spread the load in a more even radial direction, the arms 50,52 are disposed on the plane 70 perpendicular to the plane 72 on which lie the legs 36,38.

This also makes it possible to mould the plug in a two-part mould with only the core pin 28 required as well. The arms 50,52, wings 40,42 and split 20, not to mention the inclined flutes 82 and fins 80, are all formed by contours of the two-part mould which can be separated without any unusual movements or prior withdrawals of components. The plugs do need to be sprung off the core pins by virtue of the dimensions 66 filling the indentations 68 in the core pin. However, this is not difficult as the dimension 66 is gently sloped and the arms 50,52 can easily flex about hinge 56.

The end result of these various features is wall plug of enhanced performance but which nevertheless can be constructed in the least expensive method.

## Claims

1. A wall plug (10) comprising:-
a body portion (12) constructed as a substantially cylindrical body having an axial through-bore (24);
a legs portion (14) connected to said body portion (12) and comprising two legs (36,38) defined by a slit (20) substantially disposed about a first plane (70); and
two arms (50,52) formed in said body portion (12) by U-shaped openings (54) in said body portion, one on either side of said body portion, said arms (50,52) each comprising a base (58) connected along a hinge line (56) to said body portion, said hinge line (56) being closer to said leg portions (14) than said base (58) and said base (58) is lying substantially parallel the axis (100) of said through-bore (24), having transverse ridges (60) formed on said base, which ridges (60) are so arranged that they have an axial dimension to counteract rotational forces on the plug; and characterised in that
said ridges (60) are curved so that their centres between their edges are nearer said legs portion (14) than their edges.

2. A wall plug as claimed in claim 1, in which said ridges (60) are chevron-shaped.

3. A wall plug as claimed in any preceding claims in which there are three ridges (60) on each arm disposed one behind the other.

4. A wall plug as claimed in any one of the preceding claims wherein said transverse ridges (60) extend beyond said base (58) in both a radial and a circumferencial direction with respect to said axis (100).

5. A wall plug as claimed in claim 4 in which the extensions of the ridges (60) radially and circumferencially meet at corners (64) of the ridges, which corners are sharpe.

6. A wall plug as claimed in one of the preceding claims wherein said arms (50,52) are disposed on said first plane (70) .

7. A wall plug as claimed in one of the preceding claims in which said arms (50,52) have a dimension (66) extending into the bore (24) of said plug which is greater along the sides of the arm than along a central axis of the arm.

8. A wall plug as claimed in any one of the preceding claims having two wings (40,42) formed on said leg portions and disposed on a plane (72) substantially perpendicular to said first plane (70), each wing (40,42) being connected to a respective leg (36,38) along a hinge line (44) and each wing extending outwardly and backwardly toward said body portion (12), recesses (48) in said plug being provided to house said wings within the general confines of the plug when said wings (40,42) are bent towards the plug about said hinge line (44) .

9. A wall plug as claimed in claim 8 wherein a line joining the free ends of the two wings (40,42) is substantially coincident with the conjunction of said body (12) and legs portion (14) of the plug.

10. A wall plug as claimed in any one of the preceding claims in which said slit (20) substantially disposed about the first plane (70) is not straight and that the slit on one side of the plug is substantially the image of the slit on the other side of the plug.

## Patentansprüche

1. Wand-Dübel (10), mit:
einem Körperbereich (12), der als ein im wesentlichen zylindrischer Körper mit einer axialen Durchgangsbohrung (24) ausgebildet ist;
einem Schenkelbereich (14), der mit dem Körperbereich (12) verbunden ist und zwei Schenkel (36, 38) aufweist, die durch einen Einschnitt (20) gebildet sind, der im wesentlichen um eine erste Ebene (70) herum angeordnet ist; und
zwei Armen (50, 52), die in dem Körperbereich (12) durch U-förmige Öffnungen (54) in dem Körperbereich gebildet sind, und zwar einer an jeder Seite von dem Körperbereich, wobei die Arme (50, 52) jeweils eine Basis (58) haben, die entlang einer Gelenklinie (56) mit dem Körperbereich verbunden ist, wobei die Gelenklinie (56) in größerer Nähe zu dem Schenkelbereich (14) gelegen ist als die Basis (58) und die Basis (58) im wesentlichen parallel zu der Achse (100) der Durchgangsbohrung (24) liegt sowie quer verlaufende Rippen (60) hat, die auf der Basis gebildet sind, wobei die Rippen (60) so ausgestaltet sind, daß sie axiale Abmessungen haben, um Drehkräften entgegenzuwirken, die auf den Dübel wirken, und **dadurch gekennzeichnet**, daß
die Rippen (60) so gekrümmt sind, daß ihre Mittelpunkte zwischen ihren Flanken in größerer Nähe zu den Schenkelbereichen (14) gelegen sind als ihre Flanken.

2. Wand-Dübel nach Anspruch 1, bei dem die Rippen (60) zickzackförmig sind.

3. Wand-Dübel nach einem der vorhergehenden Ansprüche, bei dem an jedem Arm drei nebeneinander angeordnete Rippen (60) vorgesehen sind.

4. Wand-Dübel nach einem der vorhergehenden Ansprüche, bei dem sich die quer verlaufenden Rippen (60) bezüglich der Achse (100) jenseits der Basis (58) sowohl in Radial- als auch in Umfangsrichtung erstrecken.

5. Wand-Dübel nach Anspruch 4, bei dem sich die Erstreckungen der Rippen in Radial- und Umfangsrichtung an Kanten (64) der Rippen treffen, wobei die Kanten scharf sind.

6. Wand-Dübel nach einem der vorhergehenden Ansprüche, bei dem die Arme (50, 52) an der ersten Ebene (70) angeordnet sind.

7. Wand-Dübel nach einem der vorhergehenden Ansprüche, bei dem die Arme (50, 52) eine sich in die Bohrung (24) des Dübels erstreckende Abmessung (66) haben, die entlang der Seiten des Arms größer ist als entlang einer Mittelachse des Arms.

8. Wand-Dübel nach einem der vorhergehenden Ansprüche, mit zwei Flügeln (40, 42), die an den Schenkelbereichen ausgebildet und an einer Ebene (72) angeordnet sind, die im wesentlichen senkrecht zu der ersten Ebene (70) verläuft, wobei jeder Flügel (40, 42) entlang einer Gelenklinie (44) mit einem zugehörigen Schenkel (36, 38) verbunden ist und sich jeder Flügel nach außen und nach hinten in Richtung des Körperbereiches (12) erstreckt, in dem Dübel Aussparungen (48) vorgesehen sind, um die Flügel im wesentlichen innerhalb der Umhüllung des Dübels aufzunehmen, wenn die Flügel (40, 42) um die Gelenklinie (44) in Richtung auf den Dübel gebogen werden.

9. Wand-Dübel nach Anspruch 8, bei dem eine Linie, die sich an die freien Enden der beiden Flügel (40, 42) anschließt, im wesentlichen mit der Verbindung zwischen dem Körper (12) und dem Schenkelbereich (14) des Dübels zusammenfällt.

10. Wand-Dübel nach einem der vorhergehenden Ansprüche, bei dem der Einschnitt (20), der im wesentlichen um die erste Ebene (70) herum angeordnet ist, nicht gerade verläuft, und daß der Einschnitt an einer Seite des Dübels im wesentlichen gleich dem Einschnitt an der anderen Seite des Dübels ist.

## Revendications

1. Cheville murale (10) comportant :
■ une partie corps (12) fabriquée sous la forme d'un corps à peu près cylindrique comportant un alésage traversant axial (24),
■ une partie pattes (14) reliée à ladite partie corps (12) et comportant deux pattes (36, 38), définies par une fente (20), disposées à peu près autour d'un premier plan (70), et
■ deux bras (50, 52) formés dans ladite partie corps (12) par des ouvertures (54) en forme de U pratiquées dans ladite partie corps, un de chaque côté de ladite partie corps, lesdits bras (50, 52) comportant chacun une base (58) reliée le long d'une ligne d'articulation (56) à ladite partie corps, ladite ligne d'articulation (56) étant plus proche desdites parties pattes (14) que ladite base (58) et ladite base (58) étant positionnée à peu près parallèlement à l'axe (100) dudit alésage traversant (24), comportant des nervures transversales (60) formées sur ladite base, lesquelles nervures (60) sont conçues de manière à comporter une dimension axiale destinée à s'opposer aux forces de rotation s'exerçant sur la cheville, et étant caractérisée en ce que
lesdites nervures (60) sont incurvées de sorte que leurs points centraux situés entre leurs bords soient plus proches de ladite partie pattes (14) que leurs bords.

2. Cheville murale selon la revendication 1, dans laquelle lesdites nervures (60) ont la forme de chevrons.

3. Cheville murale selon l'une quelconque des revendications précédentes, dans laquelle trois nervures (60) sont disposées, sur chaque bras, l'une derrière l'autre.

4. Cheville murale selon l'une quelconque des revendications précédentes, dans laquelle lesdites nervures transversales (60) s'étendent au-delà de ladite base (58) à la fois dans une direction radiale et dans une direction circonférentielle par rapport audit axe (100).

5. Cheville murale selon la revendication 4, dans laquelle les extensions des nervures (60) se rencontrent radialement et circonférentiellement au niveau de coins (64) des nervures, lesquels coins sont affûtés.

6. Cheville murale selon l'une quelconque des revendications précédentes, dans laquelle lesdits bras (50, 52) sont disposés sur ledit premier plan (70).

7. Cheville murale selon l'une quelconque des revendications précédentes, dans laquelle lesdits bras (50, 52) ont une dimension (66) qui s'étend à l'intérieur de l'alésage (24) de ladite cheville qui est plus importante le long des côtés du bras que le long de l'axe central du bras.

8. Cheville murale selon l'une quelconque des revendications précédentes, comportant deux ailes (40, 42) formées sur lesdites parties pattes et disposées sur un plan (72) à peu près perpendiculaire audit premier plan (70), chaque aile (40, 42) étant reliée à une patte (36, 38) respective le long d'une ligne d'articulation (44) et chaque aile s'étendant vers l'extérieur et vers l'arrière vers ladite partie corps (12), des évidements (48) étant prévus dans ladite cheville pour recevoir lesdites ailes de manière à ce que celles-ci épousent le profil général de la cheville lorsque lesdites ailes (40, 42) sont déformées vers la cheville autour de ladite ligne d'articulation (44).

9. Cheville murale selon la revendication 8, dans laquelle une ligne joignant les extrémités libres des deux ailes (40, 42) coïncide à peu près avec l'intersection dudit corps (12) et de ladite partie pattes (14) de la cheville.

10. Cheville murale selon l'une quelconque des revendications précédentes, dans laquelle ladite fente (20), disposée à peu près autour du premier plan (70), n'est pas rectiligne et la fente formée d'un premier côté de la cheville est à peu près l'image de la fente formée de l'autre côté de la cheville.
